# EUROPÄISCHE PATENTSCHRIFT

(11) **EP 3 875 687 B1**
(45) Veröffentlichungstag und Bekanntmachung des Hinweises auf die Patenterteilung: **19.07.2023**
(21) Anmeldenummer: 21156484.4
(22) Anmeldetag: 11.02.2021
(51) Int. Cl.: E01C 19/42, E01C 19/00

(54) **VORRICHTUNG ZUM EINBAU VON GUSSASPHALT AUF EINEM FAHRBAHNUNTERGRUND UND VERFAHREN ZUR FERTIGUNG EINER ASPHALTFAHRBAHN**
DEVICE FOR INSTALLING ASPHALT ON A ROAD SUBSTRATE AND METHOD FOR PRODUCING AN ASPHALT ROAD
DISPOSITIF DE POSE D'ASPHALTE COULÉ SUR UN FOND DE CHAUSSÉE ET PROCÉDÉ DE CONSTRUCTION D'UNE CHAUSSÉE D'ASPHALTE

(30) Priorität: 04.03.2020 CH 2562020
(43) Veröffentlichungstag der Anmeldung: 08.09.2021
(73) Patentinhaber: KIBAG Bauleistungen AG, 8854 Müllheim-Wigoltingen (CH)
(72) Erfinder: Debrunner, Christian, 8583 Sulgen (CH); Scherrer, Ralf, 9107 Urnäsch (CH)
(74) Vertreter: Schmauder & Partner AG Patent- & Markenanwälte VSP

(56) Entgegenhaltungen:
- DE-A1- 2 314 812
- DE-A1- 2 531 667
- DE-U1- 20 000 148
- US-A1- 2006 018 715

## Beschreibung

### Technisches Gebiet

Die Erfindung betrifft eine Vorrichtung zum Einbau von Gussasphalt auf einem Fahrbahnuntergrund gemäss dem Oberbegriff des Anspruchs 1 sowie ein Verfahren zur Fertigung einer Asphaltfahrbahn mittels der erfindungsgemässen Vorrichtung.

### Stand der Technik

Beim Bau von Asphaltfahrbahnen werden bekanntlich zwei unterschiedliche Einbauverfahren verwendet, welche auf der Verwendung von Walzasphalt bzw. Gussasphalt beruhen. Beide Arten von Asphaltmaterial werden auf einem zuvor vorbereiteten Untergrund, insbesondere auf einen Fahrbahnuntergrund eingebaut. Dabei wird Walzasphalt zunächst ausgelegt und vorverdichtet, um anschliessend mit schweren Walzen und ggf. Vibrationseinwirkung auf einen vordefinierten Niveauverlauf verdichtet zu werden. Demgegenüber kann Gussasphalt ausgegossen, verteilt und durch ein entsprechendes Gerät, insbesondere durch eine Gussasphaltbohle in die endgültige Lage eingebaut werden.

Vorrichtungen zum Einbau von Gussasphalt sind in zahlreichen Ausführungsformen bekannt und insbesondere beschrieben in DE 7307942 U, DE 2531667 A1 und DE 2314812 A.

Ebenso sind diverse selbstverdichtende Gussasphaltmischungen bekannt, wie beispielsweise in WO 2010/089097 A1 beschrieben.

Dass bei Verwendung von Gussasphalt eine Verdichtung mit schweren Walzen nicht erforderlich ist, stellt grundsätzlich einen Vorteil des Verfahrens dar. Allerdings bedingt die Tatsache, dass zur Bildung eines vordefinierten Niveauverlaufs des Asphaltbelags ein einziger Durchgang der Einbaubohle erfolgt, eine sehr präzise Höhenkontrolle beim Betrieb der Vorrichtung. Beispielsweise wird im schweizerischen Strassenbau vorgeschrieben, dass bei Strassenoberbauten für eine signalisierte maximale Geschwindigkeit von über 80 km/h nur Einzelunebenheiten bis 4 mm zulässig sind (REG norm VSS 40 525: 2019, Nationales Register zur Veröffentlichung von Normen, Standards und weiteren Regulierungen, Seite 6, Tab. 1). Als Folge davon wird in der Schweiz für den Einbau von Gussasphalt üblicherweise mit einer schienengebundenen Gerätschaft gearbeitet. Dies bedeutet jedoch, dass zur Fertigung einer Asphaltfahrbahn zunächst der Fahrbahnuntergrund erstellt und dieser mit seitlichen Schienen ausgestattet werden muss, welche genau in einem bestimmten Abstand zum vordefinierten Niveauverlauf einzumessen sind. Nach dieser Vorbereitung kann ein mit der Einbaubohle versehenes Schienengefährt über das ausgelegte Gussasphaltmaterial geführt werden.

US 2006/018715 A1 beschreibt eine angetriebene Glättvorrichtung, welche insbesondere zum Glattstreichen von Frischbeton ausgestaltet ist. Die Vorrichtung umfasst einen Abziehpflug, welcher auf einem zugehörigen Gefährt in einer bezüglich einer Arbeitsfahrtrichtung nachgelagerten Position angeordnet ist.

Angesichts des erheblichen Aufwandes beim schienengeführten Einbau von Gussasphalt wäre es sehr wünschenswert, über eine vereinfachte aber dennoch zuverlässige Prozedur zu verfügen.

### Darstellung der Erfindung

Aufgabe der Erfindung ist es somit, eine verbesserte Vorrichtung zum Einbau von Gussasphalt auf einem Fahrbahnuntergrund anzugeben. Eine weitere Aufgabe der Erfindung liegt in der Bereitstellung eines Verfahrens zur Fertigung einer Asphaltfahrbahn unter Verwendung der erfindungsgemässen Vorrichtung.

Gelöst werden diese Aufgaben durch die im Anspruch 1 definierte Vorrichtung sowie durch das im Anspruch 9 definierte Verfahren.

Die erfindungsgemässe Vorrichtung zum Einbau von Gussasphalt auf einem Fahrbahnuntergrund umfasst:
- ein in einer Fahrtrichtung auf seitlichen Laufwerken auf dem Fahrbahnuntergrund verschiebliches Gefährt;
- eine am Gefährt höhenverstellbar befestigte, quer zur Fahrtrichtung ausgerichtete Einbaubohle, welche sich über eine vorgegebene Einbaubreite erstreckt, um vor dem Gefährt auf den Fahrbahnuntergrund ausgeschütteten Gussasphalt zur Bildung eines Asphaltbelags glattzustreichen. Die Einbaubohle befindet sich zwischen oder vor den seitlichen Laufwerken, d.h. ist nicht hinter den seitlichen Laufwerken angeordnet wie dies bei nachgezogenen Glattstreichern der Fall ist.

Im vorliegenden Zusammenhang, d.h. beim Einbau von Gussasphalt auf einem Fahrbahnuntergrund wird die Fahrtrichtung des Gefährts so gewählt, dass sie parallel zur lokalen Längsrichtung der zu erstellenden Fahrbahn ausgerichtet ist. Die hier verwendeten Richtungsbegriffe "vor" bzw. "nach" beziehen sich dabei auf die Fahrtrichtung des Gefährts.

Dadurch, dass das Gefährt für einen schienenfreien Betrieb ausgebildet ist und dass die Vorrichtung mit Stellmitteln zur laufenden Höhenverstellung der Einbaubohle entsprechend einem vordefinierten Niveauverlauf des Asphaltbelags ausgestattet ist, wobei die Stellmittel mit einer Positionsbestimmungseinrichtung zusammenwirken, welche eine fahrzeugfeste Komponente und eine ortsfeste Komponente umfasst, ergeben sich gegenüber dem Stand der Technik diverse Vorteile.

Insbesondere wird durch die Möglichkeit der laufenden Höhenverstellung der Einbaubohle ein schienenfreier Betrieb des Gefährtes ohne nennenswerte Einbusse an Präzision ermöglicht, was letztlich eine erhebliche Verringerung des zeitlichen Aufwandes erlaubt. Diese ergibt sich allein schon durch den Entfall der anfänglichen Auslegung von Schienen. Unter dem Begriff "laufende Höhenverstellung" ist im vorliegenden Zusammenhang nicht nur ein kontinuierlicher Vorgang im strengen Sinn, sondern auch eine in kurzen Zeitabständen erfolgende Verstellung zu verstehen. Allerdings müssen die Zeitabstände im Vergleich zum zeitlichen Verlauf des Einbauverfahrens, insbesondere zur Geschwindigkeit des Gefährts, genügend kurz sein.

Entsprechend den oben genannten Vorteilen wird die erfindungsgemässe Vorrichtung beim erfindungsgemässen Verfahren zur Fertigung einer Asphaltfahrbahn eingesetzt, wobei das Gefährt auf einem vorbereiteten Fahrbahnuntergrund in Fahrtrichtung fortbewegt wird und dabei vor dem Gefährt auf den Fahrbahnuntergrund ausgeschütteten Gussasphalt zu einem die Asphaltfahrbahn bildenden Asphaltbelag glattstreicht, und wobei die Einbaubohle entsprechend einem vordefinierten Niveauverlauf des Asphaltbelags laufend höhenverstellt wird. Die Fortbewegungsgeschwindigkeit des Gefährts lässt sich situationsbedingt aus einem breiten Bereich auswählen, welcher typischerweise zwischen ca. 0.1 und 3 m/min liegt.

Es versteht sich, dass aufgrund der quer zur Fahrtrichtung ausgerichteten Einbaubohle die erwähnte Einbaubreite gerade durch die Gesamtlänge der Einbaubohle definiert ist. Die Vorrichtung ist grundsätzlich so konfiguriert, dass sich damit ein Asphaltbelag, insbesondere für eine Asphaltfahrbahn mit einer Breite fertigen lässt, welche der vorgegebenen Einbaubreite der Einbaubohle entspricht.

Vorteilhafte Ausgestaltungen und Ausführungsformen sind in den abhängigen Ansprüchen definiert.

Gemäss einer vorteilhaften Ausgestaltung lässt sich die gegenständliche Gesamtlänge der Einbaubohle, welche wie bereits erwähnt die Einbaubreite definiert, entsprechend der gewünschten Anwendung vorgängig einstellen, wobei sich insbesondere eine Einbaubreite von 2.5 bis 15 m einstellen lässt (Anspruch 2). Entsprechend konfigurierte Ausziehbohlen sind grundsätzlich bekannt.

Grundsätzlich sind verschiedene Arten von Positionsbestimmungseinrichtung verwendbar. Vorteilhafterweise umfasst die Positionsbestimmungseinrichtung als fahrzeugfeste Komponente zwei voneinander beabstandet am Fahrzeug montierte Reflektoren und als ortsfeste Komponente zwei voneinander beabstandet auf festem Grund positionierte Tachymeter (Anspruch 3). Bekanntlich können mit einem Tachymeter sowohl Horizontalrichtungen und Vertikalwinkel, als auch Schrägstrecken zu einem Zielpunkt gemessen werden. Besonders vorteilhaft sind hierfür elektronische Tachymeter, wobei solch im Handel erhältlich sind. Als Reflektoren werden zweckmässigerweise Prismenreflektoren eingesetzt.

Gemäss einer weiteren Ausgestaltung umfasst die Positionsbestimmungseinrichtung als fahrzeugfeste Komponente einen am Fahrzeug montierten Reflektor sowie einen am Fahrzeug montierten Querneigungssensor und als ortsfeste Komponente zwei voneinander beabstandet auf festem Grund positionierte Tachymeter (Anspruch 4).

Vorteilhaft ist es überdies, wenn die Stellmittel als Hubspindelantriebe oder als Hydraulikglieder ausgebildet sind (Anspruch 5). Es versteht sich, dass diese so zu konfigurieren sind, dass eine genügend schnelle Ansprechzeit bzw. Stellgeschwindigkeit erzielt wird. Konkret bedeutet dies, dass bei einer gegebenen Fortbewegungsgeschwindigkeit des Gefährts die erforderlichen Höhenverstellungen der Einbaubohle vorgenommen werden können.

Grundsätzlich sind verschiedene Ausgestaltungen der Laufwerke einsetzbar. Insbesondere könnte eine Vielzahl von entsprechend dimensionierten seitlichen Rädern vorgesehen werden. Besonders vorteilhaft ist es jedoch, wenn die Laufwerke als Raupenlaufwerke ausgebildet sind (Anspruch 6).

Gemäss einer besonders bevorzugten Ausgestaltung umfasst die Vorrichtung eine bordfeste Steuereinrichtung, mittels welcher die Zusammenwirkung von Positionsbestimmungseinrichtung und Stellmitteln entsprechend dem vordefinierten Niveauverlauf des Asphaltbelags steuerbar ist (Anspruch 7). Für eine derartige Steuereinrichtung kann insbesondere eine Komponente aus einem modularen System zur intelligenten Steuerung von Baumaschinen herangezogen werden. Derartige Systeme werden von verschiedenen Herstellern angeboten, beispielsweise als sog. "Totalstation" von Leica Geosystems AG. Eine beispielhafte Verwendung für die Steuerung eines aus mehreren Gefährten bestehenden Einbauzuges ist in EP 2155968 B1 beschrieben. Der Begriff "bordfest" ist im vorliegenden Fall so zu verstehen, dass die Steuereinrichtung grundsätzlich auf dem Gefährt mitfahren kann. Dabei können durchaus auch abnehmbare Komponenten wie beispielsweise Bedienungstablets und dergleichen darunter subsumiert werden.

Es versteht sich, dass für den Betrieb der erfindungsgemässen Vorrichtung bzw. für die Durchführung des erfindungsgemässen Verfahrens eine ausreichend gleichmässige Verteilung des vor dem Gefährt ausgeschütteten Gussasphaltmaterials nötig ist. Dies kann grundsätzlich bereits beim Ausschütten veranlasst werden, beispielsweise durch einen vorausfahrenden LKW mit entsprechendem Ausschüttverteiler, oder im Extremfall durch eine vorausfahrende gesonderte Querverteilungseinheit. Gemäss einer vorteilhaften Ausgestaltung ist das Gefährt der erfindungsgemässen Vorrichtung mit Querverteilungselementen für auf dem Fahrbanduntergrund befindlichen Gussasphalt ausgestattet, wobei sich die Querverteilungselemente in Fahrtrichtung vor der Einbaubohle befinden (Anspruch 8).

Gemäss einer bevorzugten Ausführungsform des Verfahrens wird der die Asphaltbahn bildende Asphaltbelag so gefertigt, dass eine Toleranz von ± 4 mm, vorzugsweise von ± 3 mm, insbesondere von ± 2 mm gegenüber dem vordefinierten Niveauverlauf eingehalten wird (Anspruch 10). Damit lassen sich insbesondere die hierzulande aktuell geltenden Vorgaben für den Bau von Asphaltfahrbahnen erfüllen.

### Kurze Beschreibung der Zeichnungen

Ein Ausführungsbeispiel der Erfindung wird nachfolgend anhand der Zeichnungen näher beschrieben, dabei zeigen:
- Fig. 1: eine erfindungsgemässe Vorrichtung, in einer seitlichen Ansicht; und
- Fig. 2: einen Teil des der Vorrichtung von Fig. 1, in perspektivischer Ansicht.

### Wege zur Ausführung der Erfindung

Zur besseren Veranschaulichung der einzelnen Elemente weichen die Abbildungen teilweise erheblich von einer massstäblichen Darstellung ab. Ferner sind einige der grundsätzlich bekannten Komponenten stark vereinfacht dargestellt oder sogar ganz weggelassen.

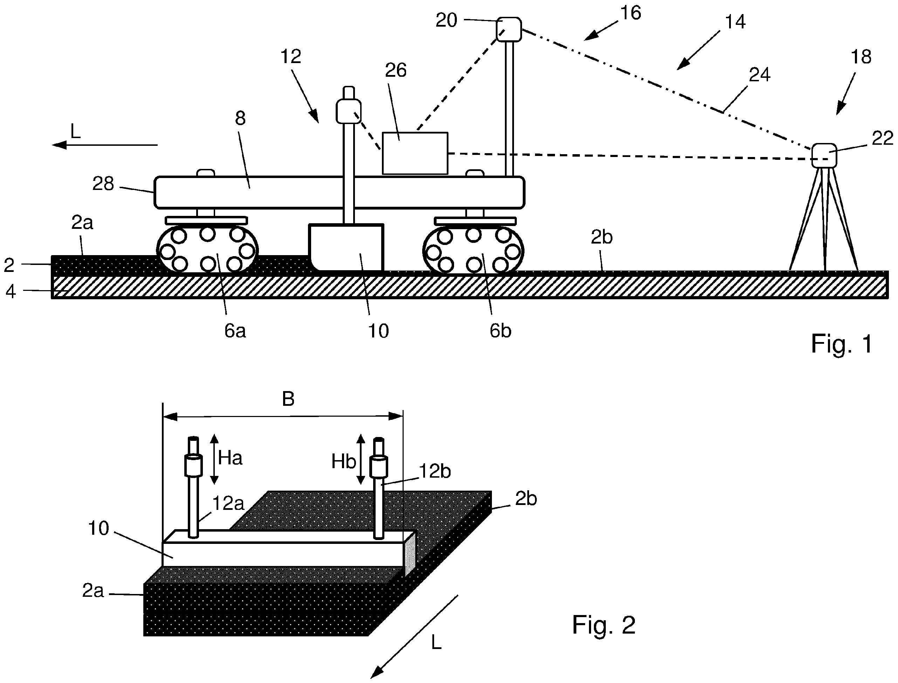

Die in der Fig. 1 dargestellte Vorrichtung zum Einbau von Gussasphalt 2 auf einem Fahrbahnuntergrund 4 umfasst ein in einer Fahrtrichtung L des Fahrbahnuntergrundes auf seitlichen Laufwerken 6a, 6b verschiebliches Gefährt 8. Die Vorrichtung ist mit einer höhenverstellbar befestigten, quer zur Fahrtrichtung L ausgerichteten Einbaubohle 10 ausgestattet, welche sich über eine vorgegebene Einbaubreite B erstreckt. Die Einbaubohle 10 ist dazu eingerichtet, vor dem Gefährt 8 auf den Fahrbahnuntergrund 4 ausgeschütteten Gussasphalt 2a zur Bildung eines Asphaltbelags 2b glattzustreichen. Dies ist in der Figur dadurch angedeutet, dass der vor der Einbaubohle 10 befindliche Gussasphalt 2a höher ist als der nach der Einbaubohle 10 befindliche Gussasphalt 2b. Es versteht sich, dass zur Bildung eines vordefinierten Niveauverlaufs des Asphaltbelags 2b eine laufende Höhenverstellung vorgenommen wird. Im gezeigten Beispiel ist die Einbaubohle 10 am Gefährt mittig, d.h. in einer Längsposition zwischen den Laufwerken 6a und 6b angeordnet.

In einer weiteren, hier nicht dargestellten Ausführungsform ist die Einbaubohle in Fahrtrichtung vor den seitlichen Laufwerken angeordnet.

Das Gefährt 8 ist für einen schienenfreien Betrieb ausgebildet, wobei die seitlichen Laufwerke 6a, 6b im gezeigten Beispiel als Raupenlaufwerke ausgestaltet sind, welche auf dem Fahrbahnuntergrund 4 laufen und das Gefährt in die durch den Pfeil dargestellte Richtung fortbewegen.

Die Vorrichtung ist zudem mit Stellmitteln 12 zur laufenden Höhenverstellung der Einbaubohle 10 entsprechend einem vordefinierten Niveauverlauf des Asphaltbelags ausgestattet. Diese Stellmittel wirken mit einer Positionsbestimmungseinrichtung 14 zusammen, welche eine fahrzeugfeste Komponente 16 und eine ortsfeste Komponente 18 umfassen. Im gezeigten Beispiel umfasst die Positionsbestimmungseinrichtung als fahrzeugfeste Komponente zwei voneinander beabstandet am Fahrzeug montierte Reflektoren 20 und als ortsfeste Komponente zwei voneinander beabstandet auf festem Grund positionierte Tachymeter 22, von denen in der Figur jeweils nur ein Exemplar sichtbar ist. Die für eine solche Gerätekombination verwendete Sichtverbindung 24 ist durch eine strichpunktierte Linie dargestellt.

Im gezeigten Beispiel sind die Stellmittel 12 als zwei seitlich angeordnete Hubspindelantriebe 12a, 12b implementiert, mittels welcher eine Höhenverstellung Ha bzw. Hb der Einbaubohle bewirkt werden kann.

Ausserdem umfasst die Vorrichtung eine bordfeste Steuereinrichtung 26, mittels welcher die Zusammenwirkung von Positionsbestimmungseinrichtung 12 und Stellmitteln 14 entsprechend dem vordefinierten Niveauverlauf des Asphaltbelags steuerbar ist. Es versteht sich, dass die erforderlichen Steuersignale durch entsprechend angelegte Kabelverbindungen, insbesondere aber auch durch kabellose Verbindungen realisiert sind, welche in der Figur nur schematisch als gestrichelte Linien angedeutet sind.

In einer weiteren, hier nicht dargestellten Ausführungsform ist das Gefährt mit Querverteilungselementen für auf dem Fahrbanduntergrund befindlichen Gussasphalt ausgestattet, die sich in Fahrtrichtung vor der Einbaubohle befinden. Diese können insbesondere an der Frontseite 28 des Gefährts angeordnet sein.

### Ausführungsbeispiel

Das erfindungsgemässe Verfahren mit der erfindungsgemässen Vorrichtung wurde auf einem Autobahnabschnitt auf einer Länge von 150 m ausgeführt. Dabei konnte in einem Durchgang die Normalspur zusammen mit der Überholspur über eine Gesamtbreite von 8 m eingebaut werden.

Als erste Schicht wurde die Binderschicht mit 30 mm MA 8 LA polymermodifiziertes Bitumen (PmB) eingebaut. Anschliessend wurde die Deckschicht mit 25 mm MA 8 LA PmB eingebaut. Während des Einbauvorgangs wurde die gesamte Einbaufläche von 1'200 m² mittels vorumhüllten Splitt 1/3 mm abgestreut.

Nach jeder Schicht wurde die Ebenheit der gerade eingebauten Schicht mittels eines Prüffahrzeugs, ausgerüstet mit 3-D Laserscanner, vermessen. In keiner der eingebauten Schichten konnten eine Höhenabweichung von mehr als +/- 1mm festgestellt werden. Das Ergebnis ist umso bemerkenswerter, als die Unterlage für das Raupenfahrwerk uneben war durch tieferliegende Schachtabdeckungen und Versatze in der Betonrinne. Dies zeigt, dass die Erfindung auch auf unebenen Untergründen einwandfrei funktioniert.

## Patentansprüche

1. Vorrichtung zum Einbau von Gussasphalt (2) auf einem Fahrbahnuntergrund (4), umfassend:
- ein in einer Fahrtrichtung (L) auf seitlichen Laufwerken (6a, 6b) auf dem Fahrbahnuntergrund (4) verschiebliches Gefährt (8);
- eine am Gefährt höhenverstellbar befestigte, quer zur Fahrtrichtung ausgerichtete Einbaubohle (10), welche sich über eine vorgegebene Einbaubreite (B) erstreckt, um vor dem Gefährt auf den Fahrbahnuntergrund ausgeschütteten Gussasphalt zur Bildung eines Asphaltbelags glattzustreichen, wobei sich die Einbaubohle (10) zwischen oder in Fahrtrichtung vor den seitlichen Laufwerken (6a, 6b) befindet; wobei das Gefährt für einen schienenfreien Betrieb ausgebildet ist, **dadurch gekennzeichnet, dass** die Vorrichtung mit Stellmitteln (12, 12a, 12b) zur laufenden Höhenverstellung der Einbaubohle entsprechend einem vordefinierten Niveauverlauf des Asphaltbelags ausgestattet ist, wobei die Stellmittel mit einer Positionsbestimmungseinrichtung (14) zusammenwirken, welche eine fahrzeugfeste Komponente (16) und eine ortsfeste Komponente (18) umfasst.

2. Vorrichtung nach Anspruch 1, wobei die Einbaubohle auf eine Einbaubreite von 2.5 bis 15 m voreinstellbar ist.

3. Vorrichtung nach Anspruch 1 oder 2, wobei die Positionsbestimmungseinrichtung als fahrzeugfeste Komponente zwei voneinander beabstandet am Fahrzeug montierte Reflektoren (20) und als ortsfeste Komponente zwei voneinander beabstandet auf festem Grund positionierte Tachymeter (22) umfasst.

4. Vorrichtung nach Anspruch 1 oder 2, wobei die Positionsbestimmungseinrichtung als fahrzeugfeste Komponente einen am Fahrzeug montierten Reflektor sowie einen am Fahrzeug montierten Querneigungssensor und als ortsfeste Komponente zwei voneinander beabstandet auf festem Grund positionierte Tachymeter umfasst.

5. Vorrichtung nach einem der Ansprüche 1 bis 4, wobei die Stellmittel als Hubspindelantriebe oder als Hydraulikglieder ausgebildet sind.

6. Vorrichtung nach einem der Ansprüche 1 bis 5, wobei die Laufwerke als Raupenlaufwerke oder als Radlaufwerke ausgebildet sind.

7. Vorrichtung nach einem der Ansprüche 1 bis 6, weiterhin umfassend eine bordfeste Steuereinrichtung (26), mittels welcher die Zusammenwirkung von Positionsbestimmungseinrichtung und Stellmitteln entsprechend dem vordefinierten Niveauverlauf des Asphaltbelags steuerbar ist.

8. Vorrichtung nach einem der Ansprüche 1 bis 7, wobei das Gefährt mit Querverteilungselementen für auf dem Fahrbanduntergrund befindlichen Gussasphalt ausgestattet ist, wobei sich die Querverteilungselemente (28) in Fahrtrichtung (L) vor der Einbaubohle befinden.

9. Verfahren zur Fertigung einer Asphaltfahrbahn mittels einer Vorrichtung nach einem der vorgenannten Ansprüche, wobei das Gefährt auf einem vorbereiteten Fahrbahnuntergrund in Fahrtrichtung (L) fortbewegt wird und dabei vor dem Gefährt auf den Fahrbahnuntergrund ausgeschütteten Gussasphalt zu einem die Asphaltfahrbahn bildenden Asphaltbelag glattstreicht, wobei die Einbaubohle entsprechend einem vordefinierten Niveauverlauf des Asphaltbelags laufend höhenverstellt wird.

10. Verfahren nach Anspruch 9, wobei der Asphaltbelag mit einer Toleranz von ± 4 mm, vorzugsweise von ± 3 mm, insbesondere von ± 2 mm gegenüber dem vordefinierten Niveauverlauf glattgestrichen wird.

## Claims

1. A device for installing asphalt (2) on a road substrate (4), comprising:
- a vehicle (8) that is displaceable, on lateral running gears (6a, 6b), in a direction of travel (L) on the road substrate (4);
- a paving screed (10) attached to the vehicle in a height-adjustable manner and aligned transversely to the direction of travel, which paving screed extends over a predetermined paving width (B), in order to smoothen asphalt poured onto the road substrate in front of the vehicle to form an asphalt surface, the paving screed (10) being located between or in front of the lateral running gears (6a, 6b) in the direction of travel;
wherein the vehicle is configured for rail-free operation, **characterized in that** the device is provided with actuating means (12, 12a, 12b) for continuously adjusting the height of the paving screed according to a predefined level course of the asphalt substrate, wherein the actuating means cooperate with a position determining device (14) which comprises a vehicle-fixed component (16) and a stationary component (18).

2. The device according to claim 1, wherein the paving screed is presettable to a paving width of 2.5 to 15 m.

3. The device according to claim 1 or 2, wherein the position determining device comprises, as the vehicle-fixed component, two reflectors (20) mounted at a distance from each other on the vehicle, and, as the stationary component, two tachymeters (22) positioned on fixed ground at a distance from each other.

4. The device according to claim 1 or 2, wherein the position determining device comprises, as the vehicle-fixed component, a reflector mounted on the vehicle, and, as a transverse inclination sensor mounted on the vehicle, and, as the stationary component, two tachymeters positioned on a fixed ground at a distance from each other.

5. The device according to one of claims 1 to 4, wherein the actuating means are configured as piston spindle drives or as hydraulic members.

6. The device according to one of claims 1 to 5, wherein the running gears are configured as caterpillar running gears or as wheeled running gears.

7. The device according to one of claims 1 to 6, further comprising an on-board control unit (26), by means of which the cooperating of the position determining device and the actuating means is controllable in accordance with the predefined level course of the asphalt substrate.

8. The device according to one of claims 1 to 7, wherein the vehicle is provided with elements for transverse distribution of asphalt located on the road substrate, wherein the elements (28) for transverse distribution are disposed in front of the paving screed, in the direction of travel.

9. A method for producing an asphalt road by means of a device according to one of the aforementioned claims, wherein the vehicle is moved, in the direction of travel, on a prepared road substrate and, during this process, smoothens asphalt poured onto the road substrate in front of the vehicle so as to form an asphalt surface making up the asphalt road, wherein the paving screed is continuously adjusted according to a predefined level course of the asphalt substrate.

10. The method according to claim 9, wherein the asphalt substrate is smoothened with a tolerance of ± 4 mm, preferably of ± 3 mm, in particular of ± 2 mm with respect to the predefined level course.

## Revendications

1. Dispositif pour intégrer de l'asphalte coulé (2) à une sous-couche de chaussée (4) comprenant :
- un véhicule (8) se déplaçant dans la direction de circulation (L) sur des trains de roulement (6a, 6b) latéraux sur la sous-couche de chaussée (4),
- une poutre lisseuse (10) orientée transversalement à la direction de circulation, fixée de manière réglable en hauteur au véhicule, cette poutre s'étendant sur une largeur d'installation (B) prédéfinie pour lisser l'asphalte coulé, déversé, sur la sous-couche de la chaussée en amont du véhicule pour former un revêtement d'asphalte, la poutre de lissage (10) se trouvant entre les trains de roulement latéraux (6a, 6b) ou en amont dans la direction de circulation,
- le véhicule étant réalisé pour circuler sans rail,
dispositif **caractérisé en ce que**
le dispositif comporte des moyens de réglage (12, 12a, 12b) pour régler en continu la hauteur du revêtement d'asphalte, les moyens de réglage coopérant avec une installation de détermination de position (14) qui saisit un composant (16) solidaire du véhicule et un composant fixe (18).

2. Dispositif selon la revendication 1,
dans lequel
la poutre de lissage est préréglable sur une largeur de montage de 2,5 à 15 m.

3. Dispositif selon la revendication 1 ou 2,
dans lequel
l'installation de détermination de position comprend comme composant solidaire du véhicule, deux réflecteurs (20) montés écartés l'un de l'autre sur le véhicule et comme composant fixe, deux tachymètres (22) écartés l'un de l'autre fixes sur le sol.

4. Dispositif selon la revendication 1 ou 2,
dans lequel
l'installation de détermination de position comprend comme composant solidaire du véhicule, un réflecteur monté sur le véhicule et un capteur d'inclinaison transversale, monté sur le véhicule et comme composant fixe, deux tachymètres écartés l'un de l'autre et positionnés fixes sur le sol.

5. Dispositif selon l'une des revendications 1 à 4,
dans lequel
les moyens de réglage sont réalisés comme entraînement à broche ou comme organe hydraulique.

6. Dispositif selon l'une des revendications 1 à 5,
dans lequel
les trains de roulement sont des trains de roulement à chenille ou des trains à roues.

7. Dispositif selon l'une des revendications 1 à 6,
comprenant en outre
une installation de commande (26) embarquée, pour commander la coopération entre l'installation de détermination de position et les moyens de réglage en fonction du tracé prédéfini du niveau de revêtement d'asphalte.

8. Dispositif selon l'une des revendications 1 à 7,
dans lequel
le véhicule est équipé d'éléments de distribution transversaux pour l'asphalte sur la sous-couche de la chaussée, les éléments de répartition transversale (28) étant en amont de la poutre de lissage dans la direction de circulation (L).

9. Procédé de réalisation d'une chaussée en asphalte avec un dispositif selon l'une des revendications précédentes,
le véhicule avançant dans la direction de circulation (L) sur une sous-couche de chaussée préparée et lissant ainsi l'asphalte coulé, déversé en amont du véhicule sur la sous-couche de la chaussée pour former un revêtement d'asphalte constituant la chaussée d'asphalte, la poutre de lissage étant réglée en hauteur, en continu en fonction du tracé prédéfini du niveau du revêtement de l'asphalte.

10. Procédé selon la revendication 9,
selon lequel
le revêtement d'asphalte est lissé avec une tolérance de ± 4 mm, de préférence de ± 3 mm notamment de ± 2 mm par rapport au tracé prédéfini du niveau.
